# EUROPEAN PATENT SPECIFICATION

(11) **EP 2 780 802 B1**
(45) Date of publication and mention of the grant of the patent: **22.03.2017**
(21) Application number: 12849432.5
(22) Date of filing: 14.11.2012
(51) Int. Cl.: G06T 19/20

(54) **PROGRESSIVELY PROVIDING SOFTWARE COMPONENTS FOR BROWSER-BASED 3D MODELING**
SCHRITTWEISE BEREITSTELLUNG VON SOFTWAREKOMPONENTEN FÜR EINE BROWSERBASIERTE 3D-MODELLIERUNG
MISE À DISPOSITION PROGRESSIVE DE COMPOSANTS LOGICIELS POUR UNE MODÉLISATION EN 3D SUR UN NAVIGATEUR

(30) Priority: 15.11.2011 US 201161559889 P
(43) Date of publication of application: 24.09.2014
(73) Proprietor: Trimble Navigation Limited, Sunnyvale, CA 94085 (US)
(72) Inventor: MILLER, Tyler, Denver, CO 80207 (US); BACUS, John, M., Boulder, CO 80305 (US)
(74) Representative: Awapatent AB
(86) International application number: PCT/US2012/064928
(87) International publication number: WO 2013/074567

(56) References cited:
- CA-A1- 2 781 638
- KR-A- 20090 041 204
- US-A1- 2004 239 679
- US-A1- 2008 229 234
- US-A1- 2010 045 670
- US-B1- 6 628 279
- Anonymous: "SketchUp - Wikipedia, the free encyclopedia", , 14 November 2011 (2011-11-14), XP055188312, Retrieved from the Internet: URL:http://en.wikipedia.org/w/index.php?ti tle=SketchUp&oldid=460527168 [retrieved on 2015-05-08]

## Description

### Cross Reference to Related Applications

This application claims the benefit of U.S. Provisional Patent Application No. 61/559,889, filed on November 15, 2011, entitled "Progressively Providing Software Components for Browser-Based 3D Modeling," the disclosure of which is hereby expressly incorporated herein by reference.

### Field of the Disclosure

The present disclosure relates to 3D modeling systems, and more specifically to a browser-based 3D modeling system that progressively provides software components supporting 3D modeling functionality.

### Background

The background description provided herein is for the purpose of generally presenting the context of the disclosure. Work of the presently named inventors, to the extent that work is described in this background section, as well as aspects of the description that may not otherwise qualify as prior art at the time of filing, are neither expressly nor impliedly admitted as prior art against the present disclosure.

Today, professional as well as non-professional users in a variety of different fields, such as engineering, architecture, automotive design, graphic design, advertising, fashion design, medicine, etc., can develop three-dimensional (3D) models of buildings, vehicles, and other objects using 3D modeling software that operates on a computing device. A user typically interacts with 3D modeling software via an input device such as a keyboard, mouse, trackball and/or stylus, and the drafting document is displayed on a graphical display device, such as a computer monitor or screen.

3D modeling software typically allows a user to create a 3D model by drawing various 3D objects (directly or by defining two-dimensional faces that make up 3D objects) and by applying colors and/or textures to surfaces of the objects. The software usually provides the user with stock objects such as spheres, polyhedrons, and other known geometric 3D objects, and/or provides tools to create such objects. Moreover, the software typically allows a user to view a rendering of a 3D model, and to interactively view the 3D model (e.g., by magnifying, panning across, or rotating the entire 3D model, or by "orbiting" the entire 3D model about a certain line or point). Further, the software typically includes editing functions that allow a user to modify a 3D model (e.g., by resizing, rotating, or changing the shape of objects within the 3D model, by changing colors and/or textures of surfaces of objects within the 3D model, and/or by redefining interactions between objects within the 3D model). Many computer operations required by 3D modeling software are complex and computationally intensive operations that involve, for example, computations in analytic geometry.

Today, various software companies offer 3D modeling software as an executable that is compatible with one or more particular platforms such as the Windows XP operating system, for example. To use the 3D modeling software, the user installs the executable on his or her computing device. To this end, several files typically are created in the persistent memory included in or associated with the computing device, appropriate records are created in the configuration file of the operating system, etc. An executable may be provided on a computer-readable medium (e.g., a compact disc) purchased by a user, for example.

Generally, software may include instructions in various formats. For example, software may include instructions that have been compiled using a compiler compatible with the particular platform of the computing device on which the software is to be installed. Executable software such as the 3D modeling software discussed above typically consists of compiled instructions, which may be executed once the software is installed on and launched by the computing device. Another example of software with compiled instructions is a plugin. A plugin is an installable software component that typically extends the functionality of one or more software applications that the plugin is designed to support.

Software instructions may be provided in other formats as well. For example, some software consists of instructions that are designed to be interpreted at runtime by a particular application. The application may interpret the instructions by parsing the instructions and recognizing syntax, keywords, commands, etc. Examples of interpretable instructions include scripting language instructions, which often are included in web pages and interpretable by web browser applications. Scripts written in JavaScript, for example, include instructions that may be interpreted at runtime by web browser applications that include a JavaScript interpreter.

Software with compiled instructions has various advantages and disadvantages relative to software with interpretable instructions. For example, compiled instructions (once installed) can generally be executed more quickly than interpretable instructions because compiled instructions do not require interpretation by a software application. Interpretable instructions, on the other hand, are generally platform-independent because the instructions do not need to be compiled for a particular platform. Moreover, interpretable instructions generally pose less of a security risk than compiled instructions because interpretable instructions do not directly access the operating system (OS) of the computing device that processes the instructions. Conversely, compiled instructions (e.g., in a plugin) could contain a virus that, when the software is installed on a computing device, damages the computing device or personal files, or causes the OS to behave in some other undesired way.

### Summary

In an embodiment, a tangible non-transitory computer-readable medium stores a plurality of software components for 3D modeling. The plurality of software components for 3D modeling includes an introductory software component and an extended software component. The introductory software component includes first instructions that, when interpreted by a web browser application executing on one or more processors of a client device, cause the web browser application to render a 3D model of one or more objects via a user interface of the client device, update a viewpoint corresponding to the rendering of the 3D model in response to receiving via the user interface a user command to update the viewpoint, generate a request for the extended software component in response to receiving via the user interface a user request, and cause the request to be transmitted to a server via a communication network. The extended software component includes second instructions configured to modify the 3D model in response to receiving via the user interface a user command to modify the 3D model.

In another embodiment, a method for providing functionality of a 3D modeling system to a user at a client device is implemented in a server device coupled to the client device via a communication network. The method includes providing an introductory software component, receiving a request for an extended software component, and providing the extended software component in response to receiving the request for the extended software component. The introductory software component includes first instructions that, when interpreted by a web browser application executing on one or more processors of the client device, cause the web browser application to render a 3D model of one or more objects via a user interface of the client device (including interpret 3D model data that describes the 3D model and conforms to a non-image format), generate a request for the extended software component in response to receiving via the user interface a user request, and cause the request to be transmitted to the server device via the communication network. The extended software component includes second instructions configured to modify the 3D model in response to receiving via the user interface a user command to modify the 3D model.

In another embodiment, a tangible non-transitory computer-readable medium stores at least one web page. The web page includes web page content, presentation instructions conforming to a markup language, first access instructions, and second access instructions. The presentation instructions, when interpreted by a web browser application executing on one or more processors of a client device, cause the web browser application to render the web page content via a user interface of the client device. The first access instructions, when interpreted by the web browser application, cause an introductory software component to be provided to the client device. The introductory software component is configured to render a 3D model of one or more objects via the user interface of the client device and update a viewpoint corresponding to the rendering of the 3D model in response to receiving via the user interface a user command to update the viewpoint. The second access instructions, when interpreted by the web browser application, generate a request for an extended software component in response to receiving a user request for extended functionality via the user interface, where the request for extended functionality is transmitted from the client device to a server via a communication network and causes the extended software component to be provided to the client device, and the extended software component is configured to modify the 3D model in response to receiving via the user interface a user command to modify the 3D model. Further, the second access instructions are configured to generate the request for the extended component only after the introductory software component is provided to the client device.

### Brief Description of the Drawings

Fig. 1 is a block diagram of a communication system in which techniques for progressively providing software components for 3D modeling can be applied;
Figs. 2A - 2B are block diagrams of example client devices that may operate in the communication system of Fig. 1;
Fig. 3 is a flow diagram of an example method for providing functionality of a 3D modeling system to a client device that may be implemented in one or more servers operating in the communication system of Fig. 1;
Fig. 4 is a flow diagram of another example method for providing functionality to a client device that may be implemented in one or more servers operating in the communication system of Fig. 1; and
Fig. 5 is a flow diagram of an example method for obtaining browser-based 3D modeling functionality that may be implemented in a client device operating in the communication system of Fig. 1.

### Detailed Description

In embodiments described below, a browser-based 3D modeling system progressively provides at least two software components to a web browser application running on a user's client device. A first, introductory software component may provide limited 3D modeling functionality (e.g., interactively viewing 3D models) while a second, extended software component may provide additional 3D modeling functionality (e.g., modifying 3D models).

The introductory software component may include instructions that are interpretable at runtime, such as instructions coded in a scripting language (e.g., JavaScript). In some embodiments, the extended software component also may include interpretable instructions. In other embodiments, the extended software component may include compiled instructions that execute on the one or more processors of the client device. For example, the extended software component may be a plugin.

The introductory and extended software components may be provided to a user's client device in various ways, at least some of which may initially involve the user accessing a web page. A web page is a resource (e.g., a file or a set of files) that is uniquely identifiable by a uniform resource locator (URL). Each web page includes content and presentation instructions describing how the content should be rendered. The web page content may include text, images, video, etc. The presentation instructions describing how the content should be rendered are typically expressed in a markup language such as hypertext markup language (HTML). More complex web pages may also include instructions in a scripting language, such as JavaScript.

A user may "visit" a web page using a web browser application running on one or more processors of his or her computing device. To this end, the user may first directly enter the URL of the desired web page in an address line of the web browser, or click on a hyperlink (e.g., underlined text or a button) in another web page, where the hyperlink is associated with the URL of the desired web page. In response to the user's URL entry or hyperlink click, the web browser generates a request for the desired web page according to the Hypertext Transfer Protocol (HTTP), for example, and a server may respond by providing the web browser with the contents and instructions in the web page. When the user visits a web page in this manner, the web browser renders the content of the web page in accordance with the instructions in the web page to allow the user to view and/or interact with the web page. Various instructions within a web page may be executed automatically by the web browser when the web page is visited, or may be subject to one or more conditions. For example, instructions that include a reference to a software component may automatically fetch the software component when the web page is visited, or may fetch the software component only if one or more other conditions are satisfied.

In keeping with the above discussion, the introductory and extended software components may be provided via one or more web pages in various ways. In some embodiments, the introductory software component is automatically provided in response to a user visiting a web page with his or her web browser. In other embodiments, the introductory software component is conditionally provided in response to the user taking one or more additional steps after initially visiting the web page, such as clicking through one or more options presented by the user's web browser. Once the introductory software component has been provided, the extended software component may be provided after the user takes one or more further steps, such as clicking through further options presented by the user's web browser.

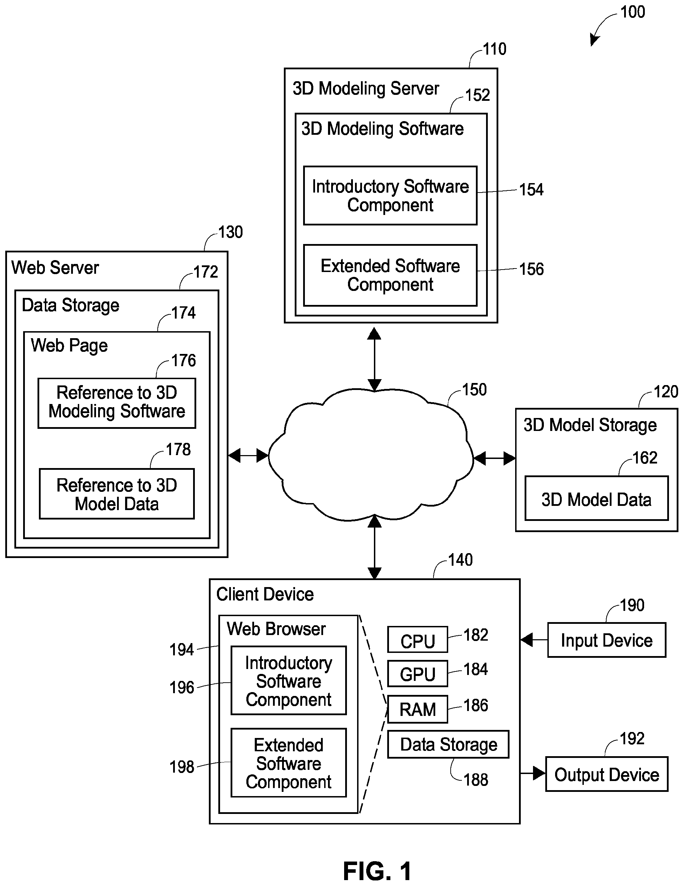

Fig. 1 is a block diagram of a communication system 100 in which techniques for progressively providing software components for 3D modeling can be applied. Referring to the embodiment illustrated in Fig. 1, the communication system 100 includes a 3D modeling server 110, a 3D model storage 120, a web server 130, and a client device 140, each of which is communicatively coupled to a communication network 150. The communication network 150 may include an Ethernet, for example, or any combination of one or more local area networks (LANs) and/or wide area networks (WANs) such as the Internet.

The 3D modeling server 110 may store a 3D modeling software 152 on a computer-readable medium with persistent memory, such as a hard disk drive or an optical disk, for example. Generally speaking, the 3D modeling software 152 provides, when executed by a compatible web browser, a 3D modeling environment with a set of modeling controls that may be used to generate, position, and variously adjust objects in 3D models, apply textures to the objects, define interactions between the objects, etc. In some embodiments, the 3D modeling software 152 is included or referenced in a web page (not shown) stored on the 3D modeling server 110. In other embodiments, the 3D modeling software 152 is stored on the web server 130. The 3D modeling software 152 includes a plurality of software components, including an introductory software component 154 and an extended software component 156. The introductory software component 154 and the extended software component 156 provide some or all of the overall functionality of the 3D modeling software 152, and are discussed in more detail below.

The 3D model storage 120 may store 3D model data 162 on a computer-readable medium with persistent memory such as a hard disk drive or an optical disk, for example. The 3D model data 162 represents a 3D model and is stored in a predefined, non-image format compatible with the 3D modeling software 152. Unlike data in an image format (e.g., raster image data), which may allow static display of the corresponding image or simple, two-dimensional viewing operations such as magnification or panning, the 3D model data 162 allows much greater interaction with the 3D model(s) that the 3D model data 162 represents. For example, the 3D model data 162 may be manipulated to change the viewpoint of the corresponding 3D model (i.e., the camera perspective from which the model is displayed) such that the 3D model appears to rotate or orbit in three dimensions (i.e. rotate or orbit about a line that is not orthogonal to the display plane). As another example, the 3D model data 162 may be manipulated to modify the corresponding 3D model by changing properties (size, shape, color, texture, orientation, etc.) of a first object within the 3D model independently of other objects within the model. As another example, the 3D model data 162 may be manipulated to modify interactions between various objects within the corresponding 3D model.

In some embodiments, the 3D model storage 120 is a part of a separate server (not shown) communicatively coupled to the communication network 150. In other embodiments, the 3D model storage 120 may be a part of the web server 130, a part of the client device 140, or a component disposed within the 3D modeling server 110. In some embodiments, the 3D model storage 120 additionally stores other 3D model data (not shown) representing other 3D models.

The web server 130 includes a data storage 172, which stores the content and instructions for a web page 174. The web page 174 may include a reference 176 to the 3D modeling software 152, and may also include a reference 178 to the 3D model data 162. The reference 176 serves to make the 3D modeling software 152, including the introductory and extended software components 154, 156, available to the client device 140 via the web page 174. In some embodiments, the reference 176 is a single reference to the 3D modeling software 152 stored on the 3D modeling server 110. In other embodiments, the reference 176 includes separate references to the introductory software component 154 and the extended software component 156 stored on the 3D modeling server 110. In still other embodiments (not shown), the 3D modeling software 152 is stored on the web server 130 in the data storage 172.

The reference 178 to the 3D model data 162 serves to make the 3D model data 162 available to the client device 140 via the web page 174. In some embodiments (not shown), the 3D model storage 120 is instead a part of the web server 130, e.g., in the data storage 172. In certain other embodiments, the web page 174 may not include the 3D model storage 120 or the reference 178. For example, the client device 140 may access the 3D model data 162 from a location unknown to the web page 174, and create a local copy on a memory of the client device 140. As another example, the user may have created his or her own 3D model and stored the 3D model data for that model locally in a memory of the client device 140.

The client device 140 in some embodiments includes a central processing unit (CPU) 182 to execute computer-readable instructions, a graphics processing unit (GPU) 184 to execute certain computer-readable instructions relating to graphics, a random access memory (RAM) unit 186 to store data and instructions during operation of programs, and a data storage 188 that includes persistent memory to store data used by the programs executed by CPU 182. By way of example, the data storage 188 may be implemented on a hard disk drive coupled to the CPU 182 via a bus (not shown). The data storage 188 may, for example, contain a local copy of the 3D model data 162. Generally speaking, the components 182, 184, 186, and 188 may be implemented in any suitable manner. Although the client device 140 in the example of Fig. 1 is a personal computer (PC), the client device 140 may be any suitable stationary or portable computing device, such as a tablet PC or a smart phone, for example. Moreover, although the client device 140 in the example of Fig. 1 includes both storage and processing components, the client device 140 in other embodiments can be a so-called "thin" client that depends on another computing device for certain computing and/or storage functions. For example, in some embodiments, the data storage 188 is external to the client device 140 and is connected to the client device 140 via a network link.

Further, the client device 140 may be coupled to an input device 190 that allows the user to enter inputs to the client device 140 and an output device 192 that allows the user to view outputs/displays from the client device 140. The input device 190 may be a pointing device such as a mouse, keyboard, touch screen, trackball device, digitizing tablet, or microphone, for example. The output device 192 may be an LCD display monitor or a touch screen, for example. Using the input device 190 and the output device 192, a user can interact with a graphical user interface (GUI) of the client device 140.

A web browser application may be stored in a program storage (not shown) on the client device 140. When the CPU 182 executes the web browser application, the RAM unit 186 may temporarily store the instructions and data required for execution of the application. Fig. 1 illustrates a web browser 194 disposed in the RAM unit 186 during execution. In operation, a user operating the client device 140 via the input device 190 may use the web browser 194 to access the web page 174 via the communication network 150. The 3D modeling software 152 provided via the web page 174 may allow the web browser 194 to present a 3D modeling GUI, where the GUI is displayed to the user on the output device 192 and allows the user to enter user commands for performing 3D modeling functions. The web browser 194 may incorporate the 3D modeling functionality of each software component as that component is provided. For example, the web browser 194 of the client device may provide a user with the functionality supported by the introductory software component 154 even before the extended software component 156 has been made available to the client device 140. However, the example embodiment of Fig. 1 shows the program space (corresponding to the RAM 186) as the program space may exist after the client device 140 has obtained both the introductory software component 154 and the extended software component 156. At that time, the web browser 194 may provide the 3D modeling functionality of both the introductory and extended software components 154, 156. In Fig. 1, this programming capability is represented in the program space as the introductory and extended software components 196, 198.

The introductory and extended software components 154, 156 of the 3D modeling software 152 may be configured to provide increasing 3D modeling functionality to a user in progressive stages. To this end, the introductory software component 154 may include instructions for rendering a 3D model (e.g., for display on the output device 192) and for interactively viewing the 3D model, while the extended software component 156 may include instructions for modifying a 3D model. In some embodiments, the introductory software component 154 provides only 3D modeling functions that relate to representation of a 3D model but do not modify the underlying 3D model data of the 3D model, while the extended software component 156 provides functions that do modify the underlying 3D model data. In some embodiments, the extended software component 156 may also include instructions for creating new 3D models. In some embodiments, the introductory software component 154 may not provide some or all of the 3D modeling functions provided by the extended software component 156, while the extended software component 156 provides some or all of the 3D modeling functions that were already provided by the introductory software component 154. For example, the introductory software component 154 may provide rendering and interactive viewing (but not modification) of 3D models, while the extended software component 156 may provide rendering, interactive viewing, and modification of 3D models.

In addition to differing in terms of the 3D modeling functionality that the components support, the introductory and extended software components 154, 156 may, in some embodiments, differ as to the format of the corresponding instructions. While the introductory software component 154 includes interpretable instructions, the extended software component 156 may in some embodiments include instructions that are interpretable at runtime, or, in other embodiments, include instructions that are compiled. For example, the extended software component 156 may include instructions in a scripting language, or may be a plugin that must be downloaded and installed on the client device 140. In embodiments where the instructions of the extended software component 156 are compiled rather than interpretable, and where the extended software component 156 provides all or most of the 3D modeling functionality of the introductory software component 154, the web browser 194 may no longer make use of the introductory software component 154 once the extended software component 156 has been installed. For example, the web browser 194 may initially render 3D models using the instructions of the introductory software component 154, but then render the models using the extended software component 156 once the component 156 has been provided to the client device 140.

In some embodiments, the introductory software component 154 (referenced by the reference 176 or stored in the web page 174, for example) may be automatically accessed by the web browser 194 when the user visits the web page 174. In other embodiments, additional access instructions that are stored in or referenced by the web page 174 may prevent the introductory software component 154 from being accessed by the web browser 194 unless one or more conditions are met. For example, the additional access instructions may prevent the introductory software component 154 from being accessed unless the web browser 194 indicates that the user agreed to the terms of a trial subscription. These or similar access instructions may be included in a "wrapper" application or script that controls access to both the introductory and extended software components 154, 156, for example. As a more specific example, the 3D modeling software 152 may include a wrapper application or script in addition to the introductory and extended software components 154, 156 with access instructions that cause the introductory software component 154 to be provided to the web browser 194 according to a first set of conditions (or, in some cases, unconditionally) and cause the extended software component 156 to be provided to the web browser 194 only after the introductory software component 154 has been provided to the client device 140 and possibly according to a set of one or more additional conditions.

In particular, once the introductory software component 154 has been provided to the client device 140, the extended software component 156 (whether stored in the web page 174 or referenced by the reference 176, for example) may be provided in response to one or more additional steps by the user. In some embodiments, the introductory software component 154 includes instructions that prevent the instructions of the extended software component 156 from being accessed by the web browser 194 unless one or more conditions are met. In other embodiments, additional instructions (e.g., instructions of a wrapper application) prevent the instructions of the extended software component 156 from being accessed by the web browser 194 unless one or more conditions are met. In either case, the conditions may, in some embodiments, be met by the user clicking through certain options or links as the options or links are rendered by the web browser 194. For example, the additional access instructions (that may be provided externally, or as a part of, the introductory software component 154) may prevent the extended software component 156 from being accessed unless the web browser 194 indicates that the user has clicked on a button representing agreement to the terms of a trial or full subscription. As another example, the additional instructions (or the introductory software component 154) may prevent the extended software component 156 from being accessed unless the web browser 194 indicates that the user has clicked on a button representing a command to perform a 3D modeling function that is shown on the 3D modeling GUI but not supported by the introductory software component 154. In some embodiments, the web page 174 may include a link to a second web page (not shown), where the second web page includes (or includes a reference to) the extended software component 156. In these embodiments, the conditions for gaining access to the extended software component 156 may be met in full or in part by the user visiting the second web page. For example, the user may visit the second web page by clicking on a button that indicates the user has agreed to the terms of a full or trial subscription.

In embodiments that include additional instructions that control access to the introductory and extended software components 154, 156 (e.g., instructions of a wrapper application), the additional instructions may be interpretable or compiled. These additional instructions may be stored in the web page 174, or the web page 174 may include a reference to the additional instructions. In some embodiments, the reference 176 may include a single reference to a software package that includes the introductory software component 154, the extended software component 156, and the wrapper application.

The instructions responsible for providing the extended software component 156 (e.g instructions within the introductory software component 154, or instructions within a wrapper application) may provide the extended software component 156 in response to a request that is generated by the web browser 194, where that request is in turn generated in response to a particular action or set of actions by the user. For example, the web browser 194 may, when interpreting the instructions of the introductory software component 154, generate a request for the extended software component 156 in response to receiving a user request via a user interface of the client device 140. The user request may take various forms, and need not be recognized by the user as a request for additional functionality. In some embodiments, a user request constitutes entry of a user command to perform a 3D modeling function that is presented via the 3D modeling GUI but not supported by the introductory software component 154. For example, if the introductory software component 154 does not support any functions for modifying a 3D model, the web browser 194 may generate a request for the extended software component 156 in response to receiving a user command to change a color, texture, or shape of an object in a 3D model. In other embodiments, a user request constitutes entry of a user selection that indicates the user's agreement to the terms of a full or trial subscription. In still other embodiments, a user request constitutes entry of a user selection that expressly requests additional functionality.

The request generated by the web browser 194 in response to the user request may also take various forms. For example, the request may merely constitute data that indicates which button or option of a 3D modeling GUI was selected by a user. In embodiments where the 3D modeling software 152 includes a wrapper application, the instructions of the wrapper application may recognize that data and respond by causing the extended software component 156 to be provided to the client device 140. In other embodiments, the introductory software component 154 may include instructions that recognize the data and respond by causing the extended software component 156 to be provided to the client device 140.

In some embodiments, the 3D modeling software 152 may also include a collaboration software component (not shown) that supports collaborative 3D model development between users operating different client devices. For example, the client device 140 may be communicatively coupled to another client device (not shown) via a network such as the communication network 150. When interpreted by the web browser 194, or installed by the client device 140, the collaboration software component may extend the functionality of the web browser 194. The collaboration software component may include instructions that provide one or more functions for collaborative 3D model development. For example, the instructions may allow a user at the client device 140 to enter a command that changes a viewpoint corresponding to the rendering of a 3D model at a different client device. As another example, the instructions may allow a user at the client device 140 to enter a command that modifies a 3D model being viewed and/or edited at a different client device.

Similar to the extended software component 156, the collaboration software component may be provided in response to a request. For example, the web browser 194, when interpreting the instructions of the introductory software component 154, may generate a request for the collaboration software component in response to receiving a user request for collaborative functionality via a user interface of the client device 140. The user request for collaborative functionality may take various forms, and need not be recognized by the user as a request for collaboration functionality. In some embodiments, a user request for collaborative functionality constitutes a user command to perform a function relating to collaborative 3D model development that is not supported by the introductory software component 154 and/or the extended software component 156, even though the corresponding control may be presented via the 3D modeling GUI. In other embodiments, a user request for collaborative functionality constitutes a user selection that indicates the user's agreement to the terms of a full or trial subscription. In still other embodiments, a user request for collaborative functionality constitutes a user selection that expressly requests collaborative 3D model development functionality.

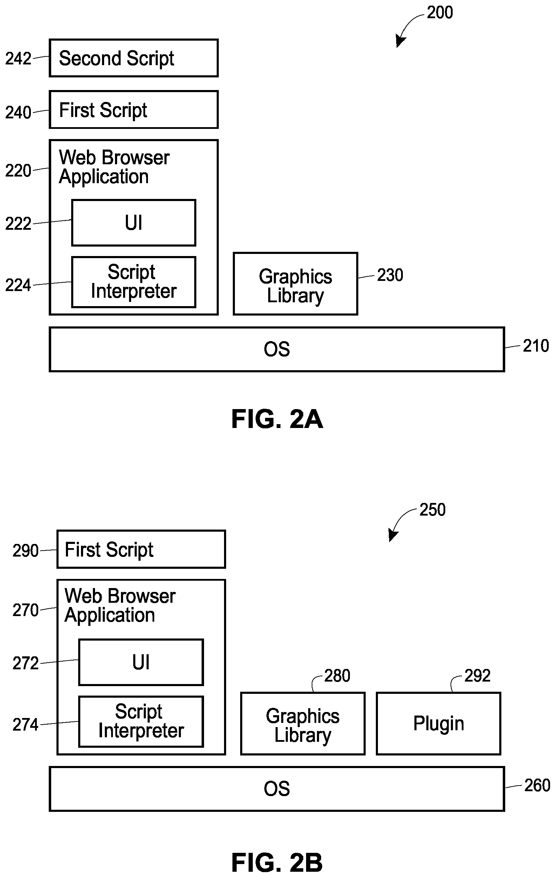

Figs. 2A and 2B are block diagrams that illustrate respective examples of a software architecture of a client device that may operate in a 3D modeling system, such as the system 100 illustrated in Fig. 1, for example. Fig. 2A illustrates an example software architecture 200 of a client device for an embodiment in which both the introductory and extended software components include interpretable instructions. In an embodiment, the client device 140 of Fig. 1 includes components implemented in accordance with the software architecture 200. The software architecture 200 includes an OS 210 that executes a web browser application 220. In operation, the web browser application 220 provides a web browser such as the web browser 194 of Fig. 1. The web browser application 220 includes a user interface (UI) 222 and a script interpreter 224. The UI 222 is a software component that receives and processes commands from a user (e.g., commands entered using the input device 190 of Fig. 1) and outputs to the user (e.g., information displayed on the output device 192 of Fig. 1). The script interpreter 224 is a software component that interprets instructions in certain scripting languages for the web browser application 220. For example, most commonly-used web browsers include a JavaScript interpreter.

The graphics library 230 is a software library that extends the graphics capabilities of one or more scripting languages. For example, the graphics library 230 may be a WebGL library that extends the capability of the web browser application 220 to support interactive 3D graphics. In some embodiments, the graphics library 230 is required in order to interpret certain instructions in a 3D modeling software component. For example, the graphics library 230 may be required to interpret certain scripting language instructions in the introductory software component 154 (and, in some embodiments, in the extended software component 156) of Fig. 1.

The scripts 240, 242 include scripting language (e.g., JavaScript) instructions that can be interpreted by the web browser application 220. The first script 240 may be a software component with some initial 3D modeling functionality, such as the introductory software component 154 in Fig. 1. The second script 242 may be a software component with some extended 3D modeling functionality, such as the extended software component 156 in Fig. 1.

Fig. 2B illustrates an example software architecture 250 of a client device for an embodiment in which the introductory software component includes interpretable instructions, while the extended software component includes compiled instructions. The software architecture 250 includes an operating system OS 260 that executes a web browser application 270, as in the software architecture 200 of Fig. 2A. Similar to the software architecture 200 of Fig. 2A, the web browser application 270 includes a UI 272 and a script interpreter 274, and the software architecture 250 includes a graphics library 280. Whereas the software architecture 200 of Fig. 2A includes two scripts 240, 242, the software architecture 250 of Fig. 2B includes a first script 290 and a plugin 292. The plugin 292 includes compiled instructions, and is installed on the computing device with OS 260. The first script 290 may be a software component with some initial 3D modeling functionality, such as the introductory software component 154 in Fig. 1. The plugin 292 may be a software component with some extended 3D modeling functionality, such as the extended software component 156 in Fig. 1.

In embodiments where 3D modeling software also includes a collaboration software component, the client device may be generally similar to the client device in Fig. 2A or Fig. 2B, except that the client device may obtain an additional software component that implements collaboration functionality. For example, the client device of Fig. 2A may include a third script or a first plugin for providing the functionality of the collaboration software component, and the client device of Fig. 2B may include a second script or a second plugin for providing the functionality of the collaboration software component.

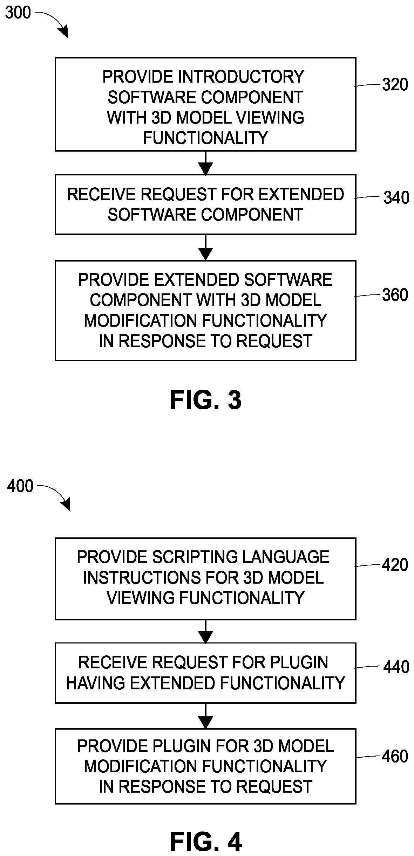

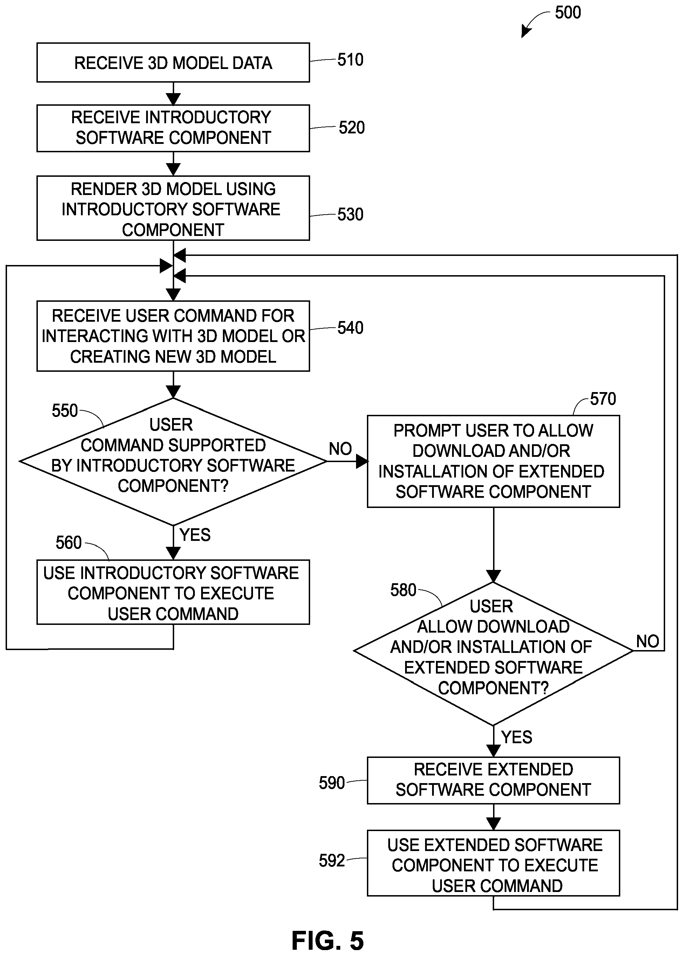

Next, several example methods are discussed with reference to Figs. 3 - 5. The methods may be implemented in the communication system 100 of Fig. 1, or in a similar environment, to progressively provide 3D modeling software components. In particular, Figs. 3 and 4 illustrate flow diagrams of methods that may be implemented in a 3D modeling server, web server, and/or other server or computing device, and Fig. 5 illustrates a flow diagram of a method that may be implemented in a client device. In general, the methods of Figs. 3 - 5 may be stored as instructions on a computer-readable medium and may be implemented using any suitable programming language. Steps that are implemented by the introductory or extended software components, however, are implemented in a language consistent with those software components as discussed above. For example, the steps in Fig. 5 that execute a user command using the introductory software component are implemented using interpretable instructions (e.g., instructions in a scripting language). In some embodiments, the methods of Figs. 3 and 4 may be the instructions of a wrapper application associated with the introductory and extended software components. The instructions in the methods of Figs. 3 - 5 may execute on one or several processors.

Fig. 3 is a flow diagram of an example method 300 for providing functionality of a 3D modeling system. The method 300 may be implemented by a computing device such as the 3D modeling server 110 or the web server 130 of Fig. 1, and will be described with reference to Fig. 1 for illustrative purposes. The method 300 may, however, be implemented by other suitable computing devices as well.

At block 320, an introductory software component with 3D model viewing functionality is provided. For example, the web server 130 may provide the introductory software component 154 to the client device 140 by including the introductory software component 154 (e.g., as a script) in the web page 174, or by including a reference to the introductory software component 154 in the web page 174. As another example, the 3D modeling server 110 may provide the introductory software component 154 to both the web server 130 and the client device 140 by storing the introductory software component 154 in a location that is referenced by the web page 174, with the web page 174 in turn being accessed by the client device 140. The introductory software component 154 may be provided automatically upon visiting a web page, or may be provided in response to one or more other conditions being met.

At block 340, a request for an extended software component is received. For example, the web server 130 may receive a request for the extended software component 156 from the web browser 194 of the client device 140. As another example, the 3D modeling server 110 may receive a request for the extended software component 156 from the web browser 194 via the web server 130, which may relay the request from the web browser 194 to the 3D modeling server 110.

Prior to being received at block 340, the request may have been generated based on the instructions of the introductory software component. The introductory software component may have caused the request to be generated, for example, in response to receiving a user request via a user interface (e.g, the UI 222 in Fig. 2A or the UI 272 in Fig. 2B). In some embodiments, the user request may be a user command corresponding to a 3D modeling function that is not supported by the introductory software component and/or is supported by the extended software component. In other embodiments, the user request may be a user selection that indicates the user's agreement to the terms of a full or trial subscription. In still other embodiments, the user request may be a user selection that expressly requests additional functionality.

At block 360, an extended software component with 3D model modification functionality is provided in response to the request for an extended software component received at block 340. For example, the web server 130 may provide the extended software component 156 to the client device 140 by including the extended software component 156 (e.g., as a script) in the web page 174 or another web page on the web server 130. As another example, the web server 130 may provide the extended software component 156 to the client device 140 by including a reference to the extended software component 156 (e.g., a reference to a script on another server, or a reference to a plugin stored on the web server 130 or the 3D modeling server 110). As another example, the 3D modeling server 110 may provide the extended software component 156 to both the web server 130 and the client device 140 by way of storing the extended software component 156 in a location that is referenced by the web page 174, with the web page 174 in turn being accessed by the client device 140.

In embodiments where 3D modeling software includes a collaboration software component, the method 300 may also include steps (not shown) to receive a request for the collaboration software component and to provide the collaboration software component with collaborative 3D model development functionality in response to the request. The steps may be similar to the steps at blocks 340 and 360 relating to the extended software component.

Fig. 4 is a flow diagram of another example method 400 for providing functionality of a 3D modeling system. In this embodiment, the introductory software component includes scripting language instructions and the extended software component is a plugin with compiled instructions. The method 400 may be implemented in a computing device such as the 3D modeling server 110 or the web server 130 of Fig. 1, and will be described with reference to Fig. 1 for illustrative purposes. The method 400 may, however, be implemented in other suitable computing devices as well.

At block 420, scripting language instructions for at least 3D model viewing functionality are provided. For example, the web server 130 may provide the scripting language instructions to the client device 140 by including the scripting language instructions in the web page 174, or by including in the web page 174 a reference to the scripting language instructions. As another example, the 3D modeling server 110 may provide the scripting language instructions to the web server 130 and to the client device 140 by storing the instructions in a location that is referenced by the web page 174, with the web page 174 in turn being accessed by the client device 140. The scripting language instructions may be provided automatically upon visiting a web page, or may be provided in response to one or more other conditions being met.

At block 440, a request for a plugin having extended functionality is received. For example, the web server 130 may receive a request for a plugin from the web browser 194 of the client device 140. As another example, the 3D modeling server 110 may receive a request for a plugin from the web browser 194 via the web server 130, which may relay the request from the web browser 194 to the 3D modeling server 110. In some embodiments, the request is only sent and received if the user responds to a prompt in a manner indicating that the user wishes to download and/or install the plugin. In other embodiments, the request may be received without waiting for a prompt or a user response to a prompt.

Prior to being received at block 440, the request may have been generated based on the scripting language instructions provided at block 420. The scripting language instructions may have caused the request to be generated, for example, in response to receiving a user request via a user interface (e.g, the UI 222 in Fig. 2A or the UI 272 in Fig. 2B). In some embodiments, the user request may be a user command corresponding to a 3D modeling function that is not supported by the introductory software component and/or is supported by the extended software component. In other embodiments, the user request may be a user selection that indicates the user's agreement to the terms of a full or trial subscription. In still other embodiments, the user request may be a user selection that expressly requests additional functionality.

At block 460, a plugin for at least 3D model modification functionality is provided in response to the request received at block 440. For example, the web server 130 may provide the plugin to the client device 140 by including a reference to the plugin in the web page 174 or another web page on the web server 130. The reference may point to a location on the web server 130, or may point to another location. As another example, the 3D modeling server 110 may provide the plugin to both the web server 130 and the client device 140 by way of storing the plugin in a location that is referenced by the web page 174, with the web page 174 in turn being accessed by the client device 140. In some embodiments, the plugin is provided only if the user responds to a prompt in a manner indicating that the user wishes to download the plugin. In other embodiments, the plugin is provided regardless of a user response to a prompt, but is not actually installed by a client device unless the user gives permission.

Fig. 5 is a flow diagram of an example method 500 that may be implemented in a client device running a web browser. Fig. 5 illustrates an embodiment in which the extended software component includes compiled instructions (e.g., the extended software component is a plugin), rather than interpretable instructions. Moreover, Fig. 5 illustrates an embodiment in which the user request received via the user interface is a user command to perform a 3D modeling function that is not supported by the introductory software component. The method 500 may be implemented by a computing device such as the client device 140 with the web browser 194 in Fig. 1, and will be described with reference to Fig. 1 for illustrative purposes. The method 500 may, however, be implemented by other suitable computing devices as well.

At block 510, 3D model data is received. For example, the client device 140 may receive the 3D model data 162 from the 3D model storage 120. In some embodiments, the 3D model data may be received by a client device automatically when a web browser of the client device accesses a web page that includes an unconditional reference to the 3D model data. In other embodiments, the 3D model data may be received in response to a user clicking on a particular button or other link within a web page (as the link is displayed by the user's web browser), where the selected link corresponds to a reference to the 3D model data. In other embodiments (not reflected in Fig. 5), the 3D model data is stored locally on a persistent memory of a client device such as the data storage 188 of the client device 140, and is not received by the client device from an external source. In still other embodiments, the 3D model data is initially received by the client device, and then is stored in a persistent memory of the client device, such as the data storage 188.

At block 520, an introductory software component is received. For example, the client device 140 may receive the introductory software component 154 from the web server 130 by reading scripting language instructions included in (or otherwise referenced by) the web page 174.

At block 530, the 3D model represented by the 3D model data received at block 510 is rendered using the introductory software component received at block 520. For example, the instructions of the introductory software component 154 may cause the web browser 194 to interpret the 3D model data 162, and then render the 3D model represented by the model data 162 such that the 3D model may be displayed on the output device 192. When executing the instructions of the introductory software component to render the 3D model, the web browser may employ a graphics library, such as the graphics library 230 of Fig. 2A or the graphics library 280 of Fig. 2B.

At block 540, a user command for interacting with the 3D model represented by the 3D model data received at block 510, or a user command for creating a new 3D model, is received via a user interface. For example, a user at the client device 140 may use the input device 190 to select an interactive viewing function or a model modification function on a 3D modeling GUI that the web browser 194 causes to be displayed on the output device 192. As another example, the user may use the input device 190 to select an option on a 3D modeling GUI to create a new 3D model. The selected command may be received by a user interface, such as the UI 222 of Fig. 2A or the UI 272 of Fig. 2B.

At block 550, it is determined whether the user command received at block 540 is supported by the introductory software component received at block 520. For example, the introductory software component 154 may include instructions that cause the web browser 194 to identify the user command that was entered, and/or cause the web browser 194 to determine whether the introductory software component 154 provides the functionality corresponding to the user command. If it is determined that the user command is supported by the introductory software component, the flow proceeds to block 560. If it is determined that the user command is not supported by the introductory software component, the flow proceeds to block 570.

At block 560, the introductory software component received at block 520 is used to execute the user command received at block 540. For example, the instructions of the introductory software component 154 may cause the web browser 194 to interpret the 3D model data 162, and then perform the appropriate function (e.g., updating a viewpoint of a 3D model) with respect to the 3D model data 162. When executing the instructions of the introductory software component, the web browser of the client device may employ a graphics library, such as the graphics library 230 of Fig. 2A or the graphics library 280 of Fig. 2B.

At block 570, a user is prompted to allow the download and/or installation of an extended software component. For example, a prompt may be displayed to a user on the output device 152, where the prompt requests permission to download and/or install the extended software component 156. The user may be provided with separate prompts for permission to download and install the extended software component, a single prompt for both, or a prompt for only one of downloading or installing the component. In some embodiments, a web browser of the client device executing the instructions of the introductory software component may cause the prompt(s) to be generated. For example, the instructions of the introductory software component 154 may cause the web browser 194 to directly generate the prompt(s), or may cause the web browser 194 to execute instructions that in turn cause another program executing on the client device 140 to generate the prompt(s).

At block 580, it is determined whether the user allowed the download and/or installation of the extended software component in response to the prompt(s) at block 570. The determination may be made by a web browser of the client device, or by the client device independently of a web browser, for example. If the user allowed the extended software component to be downloaded, installed, or downloaded and installed (depending on which actions were the subject of user prompts), the flow proceeds to block 590. If the user disallowed download or installation, the flow proceeds back to block 540.

Prior to block 590, in some embodiments, an additional step (not shown) may occur in which the client device transmits an indication that the user has allowed the download and/or installation. For example, the client device 140 (e.g., the web browser 194 of the client device 140) may transmit such an indication to the web server 130 or the 3D modeling server 110. In response to that indicator, the web server 130 or the 3D modeling server 110 may provide the extended software component 156, for example, at which point the flow may proceed to block 590.

At block 590, the extended software component is received. For example, the client device 140 may receive the extended software component 156 by downloading and installing a plugin from the web server 130 or the 3D modeling server 110. In other embodiments, the extended software component may be downloaded prior to the prompting of the user at block 570, and/or prior to the determination of the user response to the prompt at block 580, but installed only after a user allows installation via his or her response to a prompt.

At block 592, the extended software component received at block 590 is used to execute the user command received at block 540. For example, the instructions of the extended software component 156 may cause the web browser 194 to interpret the 3D model data 162, and then perform the appropriate function (e.g., modification of a 3D model) with respect to the 3D model data 162. When executing the instructions of the extended software component, the web browser of the client device may employ a graphics library, such as the graphics library 230 of Fig. 2A or the graphics library 280 of Fig. 2B.

The following additional considerations apply to the foregoing discussion. Throughout this specification, plural instances may implement operations or structures described as a single instance. Although individual operations of one or more methods are illustrated and described as separate operations, one or more of the individual operations may be performed concurrently, and nothing requires that the operations be performed in the order illustrated. These and other variations, modifications, additions, and improvements fall within the scope of the subject matter herein.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" is employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and a process for progressively providing software components for browser-based 3D modeling through the principles disclosed herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the spirit and scope defined in the appended claims.

## Claims

1. A tangible non-transitory computer-readable medium having stored thereon a plurality of software components for three-dimensional, 3D, modeling comprising:
an introductory software component (196) including first instructions (240/290) that, when interpreted by a web browser application (194/220/270) executing on one or more processors (182/184) of a client device (140), cause the web browser application (194/220/270) to:
render a 3D model of one or more objects via a user interface (222/272) of the client device (140),
update a viewpoint corresponding to the rendering of the 3D model in response to receiving via the user interface (222/272) a first user command to update the viewpoint,
receive a second user command via the user interface (222/272), the second user command corresponding to a function to add, remove, change a shape of, change a texture of, or change a color of 3D model data of an object within the 3D model,
determine if the introductory software component (196) includes second instructions (242) corresponding to the function to add, remove, change a shape of, change a texture of, or change a color of 3D model data of the object within the 3D model,
generate a request for an extended software component (198) in response to determining (550) that the introductory software component (196) does not include second instructions (242/292) corresponding to the function to add, remove, change a shape of, change a texture of, or change a color of 3D model data of the object within the 3D model,
cause the request for the extended software component (198) to be transmitted to a server (110) via a communication network (150), and
receive the extended software component (198),
wherein the extended software component (198) includes second instructions (242/292) configured to add, remove, change a shape of, change a texture of, or change a color of 3D model data of the object within the 3D model in response to receiving, via the user interface (222/272), the second user command.

2. The computer-readable medium of claim 1, wherein the second instructions (242) are interpretable by the web browser application (220).

3. The computer-readable medium of claim 1, wherein the second instructions (292) are compiled instructions.

4. The computer-readable medium of claim 1, wherein the first instructions (240/290) that cause the web browser application (220/270) to update the viewpoint corresponding to the rendering of the 3D model cause the web browser application (192/220/270):
interpret 3D model data (162), wherein the 3D model data (162) represents the 3D model and is in a non-image format; and
update the viewpoint corresponding to the rendering of the 3D model, including not modify the 3D model data (162).

5. The computer-readable medium of claim 1, wherein the second instructions (242/292) that are configured to modify the 3D model are configured to interpret 3D model data (162), wherein the 3D model data (162) represents the 3D model and is in a non-image format.

6. The computer-readable medium of claim 1, wherein:
the plurality of software components for 3D modeling further comprises a
collaboration software component;
the first instructions (240/290) of the introductory software component (196) further cause the web browser application (194/220/270) to generate a request for the collaboration software component, wherein the request for the collaboration software component is generated in response to receiving via the user interface (222) a user request for collaborative functionality; and
the collaboration software component includes third instructions configured to provide at least one function for collaborative 3D model development.

7. The computer-readable medium of claim 6, wherein the third instructions include instructions configured to update a second viewpoint corresponding to a rendering of the 3D model on a second client device in response to receiving via the user interface (222) a user command to update the second viewpoint, and wherein the second client device is communicatively coupled to the client device by a network connection.

8. The computer-readable medium of claim 1, wherein the first instructions further cause the web browser application (194/220/270) to:
in response to determining (550) that the introductory software component (196) does not include second instructions (242/292) corresponding to the function to add, remove, change a shape of, change a texture of, or change a color of 3D model data of the object within the 3D model, cause (570) to be generated a user prompt for requesting permission for at least one of downloading the extended software component (198) or installing the extended software component (198).

9. A method implemented in a server device (110) for providing functionality of a three-dimensional, 3D, modeling system to a user at a client device (140), wherein the server device (110) is coupled to the client device (140) via a communication network (150), **characterized in that** the method comprises the steps of:
providing (320/420) an introductory software component (154/196) including first instructions (240/290) that, when interpreted by a web browser application (192/220/270) executing on one or more processors (182/184) of the client device (140), cause the web browser application (192/220/270) to:
render (530) a 3D model of one or more objects via a user interface (222) of the client device (140), including interpret 3D model data (162) that describes the 3D model and conforms to a non-image format,
generate a request for an extended software component (156/198) in response to receiving (540) via the user interface (222) of the client device (140), a user request corresponding to a function to add, remove, change a shape of, change a texture of, or change a color of 3D model data of an object within the 3D model and determining that the introductory software component (1154/96) does not support the function to add, remove, change a shape of, change a texture of, or change a color of 3D model data of the object within the 3D model, and
cause the request for the extended software component (156/198) to be transmitted to the server device (110) via the communication network(150); the method further comprising:
receiving (340/440) the request for the extended software component (156/198); and
providing (360/460) the extended software component (156/198) to the client device (140) in response to receiving the request for the extended software component (156/198), wherein the extended software component (156/198) includes second instructions (242/292) configured to add, remove, change a shape of, change a texture of, or change a color of 3D model data of the object within the 3D model in response to receiving via the user interface (222) of the client device (140) a user command to add, remove, change a shape of, change a texture of, or change a color of 3D model data of the object within the 3D model, wherein without the extended software component (156/198), the user command is not supported by the introductory software component (154/196).

10. The method of claim 9, wherein:
the first instructions (240/290) further cause the web browser application (192/220/270) to update a viewpoint corresponding to the rendering of the 3D model, wherein the viewpoint is updated in response to receiving a user command to update the viewpoint via the user interface (222); and
the first instructions (240/290) are not configured to modify the 3D model in response to receiving the user command to modify the 3D model.

11. The method of claim 9, wherein providing the introductory software component (154/196) includes providing the introductory software component (154/196) via a first web page (174), and wherein providing the extended software component (156/198) includes providing the extended software component (156/198) via a second web page distinct from the first web page (174).

12. The method of claim 9, wherein providing the introductory software component (154/196) includes:
providing a reference (176) to a location of the introductory software component (154/196) via a first web page (174), wherein the introductory software component (154/196) is stored on a server (110) different from a server (130) that stores the first web page (174); and
providing the 3D model data (162) via the first web page (174).

13. The method of claim 9, wherein the second instructions (292) are compiled instructions, and wherein the second instructions (292) are further configured to:
render the 3D model via the user interface (272) of the client device (140); and
update the viewpoint corresponding to the rendering of the 3D model in response to receiving via the user interface (272) the user command to update the viewpoint.

14. The method of claim 9, further comprising:
providing a collaboration software component including third instructions that are configured to provide at least one function for collaborative 3D model development, wherein the first instructions (240/290) of the introductory software component (154/196) further cause the web browser application (154/196) to generate a request for the collaboration software component, and wherein the request for the collaboration software component is generated in response to receiving a user request for collaborative functionality via the user interface (222/272).

15. A system including:
one or more processors (182/184); and
memory (186), wherein the memory includes instructions that when executed by the one or more processors (182/184), perform the method according to any one of claims 9-14.

## Patentansprüche

1. Materieller, nichtflüchtiger computerlesbarer Datenträger, in welchem eine Vielzahl von Softwarekomponenten für dreidimensionale, 3D, Modellierung gespeichert sind, umfassend:
eine Einführungssoftwarekomponente (196), die erste Anweisungen (240/290) aufweist, die, wenn sie durch eine Web-Browserapplikation (194/220/270) interpretiert werden, auf einem oder mehreren Prozessor/en (182/184) einer Client-Vorrichtung (140) ausgeführt werden, die Web-Browserapplikation (194/220/270) zu Folgendem veranlassen:
Wiedergeben eines 3D-Modells von einem oder mehreren Objekten über eine Benutzerschnittstelle (222/272) der Client-Vorrichtung (140),
Aktualisieren eines Ansichtspunktes entsprechend der Wiedergabe des 3D-Modells in Reaktion auf das Empfangen eines ersten Benutzerbefehls über die Benutzerschnittstelle (222/272), den Ansichtspunkt zu aktualisieren,
Empfangen eines zweiten Benutzerbefehls über die Benutzerschnittstelle (222/272), wobei der zweite Benutzerbefehl einer Funktion entspricht, 3D-Modelldaten eines Objektes innerhalb des 3D-Modells hinzuzufügen, zu entfernen, zu verändern eine Gestalt zu verändern, eine Textur zu verändern oder eine Farbe zu verändern,
Bestimmen, ob die Einführungssoftwarekomponente (196) zweite Anweisungen (242) aufweist, die der Funktion entsprechen, 3D-Modelldaten des Objektes innerhalb des 3D-Modells hinzuzufügen, zu entfernen, eine Gestalt zu verändern, eine Textur zu verändern oder eine Farbe zu verändern,
Erzeugen einer Anforderung einer erweiterten Softwarekomponente (198) in Reaktion auf das Bestimmen (550), dass die Einführungssoftwarekomponente (196) die zweiten Anweisungen (242/292) nicht aufweist, die der Funktion entsprechen 3D-Modelldaten eines Objektes innerhalb des 3D-Modells hinzuzufügen, zu entfernen, eine Gestalt zu verändern, eine Textur zu verändern oder eine Farbe zu verändern,
Veranlassen, dass die Anforderung der erweiterten Softwarekomponente (198) an einen Server (110) über ein Kommunikationsnetzwerk (150) übertragen wird, und
Empfangen der erweiterten Softwarekomponente (198),
wobei die erweiterte Softwarekomponente (198) zweite Anweisungen (242/292) aufweist, die dazu ausgestaltet sind, 3D-Modelldaten eines Objektes innerhalb des 3D-Modells, in Reaktion auf das Empfangen über die Benutzerschnittstelle (222/272) des zweiten Benutzerbefehls, hinzuzufügen, zu entfernen, eine Gestalt zu verändern, eine Textur zu verändern, oder eine Farbe zu verändern.

2. Computerlesbarer Datenträger nach Anspruch 1, wobei die zweiten Anweisungen (242) durch die Webbrowserapplikation (220) interpretiert werden können.

3. Computerlesbarer Datenträger nach Anspruch 1, wobei es sich bei den zweiten Anweisungen (292) um kompilierte Anweisungen handelt.

4. Computerlesbarer Datenträger nach Anspruch 1, wobei die ersten Anweisungen (240/290), welche die Webbrowserapplikation (220/270) veranlassen, den Ansichtspunkt entsprechend der Wiedergabe des 3D-Modells zu aktualisieren, die Webbrowserapplikation (192/220/270) veranlassen:
die 3D-Modelldaten (162) zu interpretieren, wobei die 3D-Modelldaten (162) das 3D-Modell repräsentieren, und es sich in einem Nichtbildformat darstellt; und
den Ansichtspunkt entsprechend der Wiedergabe des 3D-Modells zu aktualisieren, einschließlich die 3D-Modelldaten (162) nicht zu modifizieren.

5. Computerlesbarer Datenträger nach Anspruch 1, wobei die zweiten Anweisungen (242/292), die dazu ausgestaltet sind, das 3D-Modell zu modifizieren, dazu ausgestaltet sind, die 3D-Modelldaten (162) zu interpretieren, wobei die 3D-Modelldaten (162) das 3D-Modell repräsentieren, und es sich in einem Nichtbildformat darstellt.

6. Computerlesbarer Datenträger nach Anspruch 1, wobei:
die Vielzahl von Softwarekomponenten für die 3D-Modellierung des Weiteren eine Kollaborationssoftwarekomponente umfassen;
die ersten Anweisungen (240/290) der Einführungssoftwarekomponente (196) des Weiteren die Webbrowserapplikation (192/220/270) dazu veranlassen, eine Anforderung der Kollaborationssoftwarekomponente zu erzeugen, wobei die Anforderung der Kollaborationssoftwarekomponente in Reaktion auf das Empfangen über die Benutzerschnittstelle (222) einer Benutzeranfrage für die Kollaborationsfunktionsfähigkeit erzeugt wird; und
die Kollaborationssoftwarekomponente dritte Anweisungen aufweist, die dazu ausgestaltet sind, mindestens eine Funktion für kollaborative 3D-Modellentwicklung zur Verfügung zu stellen.

7. Computerlesbarer Datenträger nach Anspruch 6, wobei die dritten Anweisungen die Anweisungen aufweisen, die dazu ausgestaltet sind, einen zweiten Ansichtspunkt zu aktualisieren, der einer Wiedergabe des 3D-Modells auf einer zweiten Clientvorrichtung entspricht, in Reaktion auf das Empfangen, über die Benutzerschnittstelle (222), eines Benutzerbefehls den zweiten Ansichtspunkt zu aktualisieren, und wobei die zweite Clientvorrichtung kommunikativ mit der Clientvorrichtung durch eine Netzwerkverbindung gekoppelt ist.

8. Computerlesbarer Datenträger nach Anspruch 1, wobei die ersten Anweisungen des Weiteren die Webbrowserapplikation (192/220/270) veranlassen:
in Reaktion auf das Bestimmen (550), dass die Einführungssoftwarekomponente (196) die zweiten Anweisungen (242/292) nicht aufweist, die der Funktion entsprechen, 3D-Modelldaten des Objektes innerhalb des 3D-Modells hinzuzufügen, zu entfernen, eine Gestalt zu verändern, eine Textur zu verändern oder eine Farbe zu verändern, zu veranlassen (570), dass eine Benutzeraufforderung zum Anfordern der Genehmigung für mindestens eins, Herunterladen der erweiterten Softwarekomponente (198) oder Installieren der erweiterten Softwarekomponente (198) erzeugt wird.

9. Verfahren, das in einer Servervorrichtung (110) zum Bereitstellen der Funktionsfähigkeit eines dreidimensionalen, 3D-, Modellierungssystems für einen Benutzer an einer Clientvorrichtung (140) implementiert wird, wobei die Servervorrichtung (110) mit der Clientvorrichtung (140) über ein Kommunikationsnetzwerk (150) gekoppelt ist, **dadurch gekennzeichnet, dass** das Verfahren die nachfolgenden Schritte umfasst:
Bereitstellen (320/420) einer Einführungssoftwarekomponente (154/196), die erste Anweisungen (240/290) aufweist, die, wenn sie durch eine Webbrowserapplikation (192/220/270) interpretiert werden, auf einem oder mehreren Prozessor/en (182/184) der Client-Vorrichtung (140) ausgeführt werden, die Webbrowserapplikation (192/220/270) zu Folgendem veranlassen:
ein 3D-Modell von einem oder mehreren Objekten über eine Benutzerschnittstelle (222) der Clientvorrichtung (140) wiederzugeben (530), einschließlich die 3D-Modelldaten (162) zu interpretieren, welche das 3D-Modell beschrieben und mit einem Nichtbildformat übereinstimmen,
eine Anforderung einer erweiterten Softwarekomponente (156/198) in Reaktion auf das Empfangen (540) über die Benutzerschnittstelle (222) der Clientvorrichtung (140) zu erzeugen, eine Benutzeranforderung entsprechend einer Funktion, 3D-Modelldaten eines Objektes innerhalb des 3D-Modells hinzuzufügen, zu entfernen, eine Gestalt zu verändern, eine Textur zu verändern oder eine Farbe zu verändern, und zu bestimmen, dass die Einführungssoftwarekomponente (1154/96) die Funktion, 3D-Modelldaten des Objektes innerhalb des 3D-Modells hinzuzufügen, zu entfernen, eine Gestalt zu verändern, eine Textur zu verändern oder eine Farbe zu verändern, nicht unterstützt, und
zu veranlassen, dass die Anforderung der erweiterten Softwarekomponente (156/198) an die Servervorrichtung (110) über das Kommunikationsnetzwerk (150) übertragen werden soll; wobei das Verfahren des Weiteren Folgendes umfasst:
Empfangen (340/440) der Anforderung der erweiterten Softwarekomponente (156/198); und
Bereitstellen (360/460) der erweiterten Softwarekomponente (156/198) an die Clientvorrichtung (140) in Reaktion auf das Empfangen der Anforderung der erweiterten Softwarekomponente (156/198), wobei die erweiterte Softwarekomponente (156/198) zweite Anweisungen (242/292) aufweist, die dazu ausgestaltet sind, 3D-Modelldaten des Objektes innerhalb des 3D-Modells hinzuzufügen, zu entfernen, eine Gestalt zu verändern, eine Textur zu verändern oder eine Farbe zu verändern, in Reaktion auf das Empfangen über die Benutzerschnittstelle (222) der Clientvorrichtung (140) eines Benutzerbefehls, 3D-Modelldaten eines Objektes innerhalb des 3D-Modells hinzuzufügen, zu entfernen, eine Gestalt zu verändern, eine Textur zu verändern oder eine Farbe zu verändern, wobei ohne die erweiterte Softwarekomponente (156/198), der Benutzerbefehl durch die Einführungssoftwarekomponente (154/196) nicht unterstützt wird.

10. Verfahren von Anspruch 9, wobei
die ersten Anweisungen (240/290) des Weiteren die Webbrowserapplikation (192/220/270) veranlassen, einen Ansichtspunkt entsprechend der Wiedergabe des 3D-Modells zu aktualisieren, wobei der Ansichtspunkt aktualisiert wird in Reaktion auf das Empfangen, über die Benutzerschnittstelle (222), eines Benutzerbefehls den Ansichtspunkt zu aktualisieren; und
die ersten Anweisungen (240/290) nicht dazu ausgestaltet sind, das 3D-Modell in Reaktion auf das Empfangen des Benutzerbefehls, das 3D-Modell zu modifizieren, zu modifizieren.

11. Verfahren nach Anspruch 9, wobei das Bereitstellen der Einführungssoftwarekomponente (154/196) das Bereitstellen der Einführungssoftwarekomponente (154/196) über eine erste Webseite (174) aufweist, und wobei das Bereitstellen der erweiterten Softwarekomponente (156/198) das Bereitstellen der erweiterten Softwarekomponente (156/198) über eine zweite Webseite aufweist, die sich von der ersten Webseite (174) unterscheidet.

12. Verfahren nach Anspruch 9, wobei das Bereitstellen der Einführungssoftwarekomponente (154/196) Folgendes aufweist:
Bereitstellen einer Referenz (176) an einen Aufenthaltsort der Einführungssoftwarekomponente (154/196) über eine erste Webseite (174), wobei die Einführungssoftwarekomponente (154/196) auf einem Server (110) gespeichert ist, der sich von einem Server (130) unterscheidet, auf dem die erste Webseite (174) gespeichert ist; und
das Bereitstellen der 3D-Modelldaten (162) über die erste Webseite (174).

13. Verfahren nach Anspruch 9, wobei es sich bei den zweiten Anweisungen (292) um kompilierte Anweisungen handelt, und wobei die zweiten Anweisungen (292) des Weiteren dazu ausgestaltet sind:
das 3D-Modell über die Benutzerschnittstelle (272) der Client-Vorrichtung (140) wiederzugeben; und
den Ansichtspunkt zu aktualisieren entsprechend der Wiedergabe des 3D-Modells in Reaktion auf das Empfangen, über die Benutzerschnittstelle (272), des ersten Benutzerbefehls den Ansichtspunkt zu aktualisieren.

14. Verfahren nach Anspruch 9, das des Weiteren Folgendes umfasst:
Bereitstellen einer Kollaborationssoftwarekomponente einschließlich der dritten Anweisungen, die dazu ausgestaltet sind, mindestens eine Funktion für kollaborative 3D-Modellentwicklung bereitzustellen, wobei die ersten Anweisungen (240/290) der
Einführungssoftwarekomponente (154/196) des Weiteren die Webbrowserapplikation (154/196) dazu zu veranlassen, eine Anforderung der Kollaborationssoftwarekomponente zu erzeugen, und wobei die Anforderung der Kollaborationssoftwarekomponente in Reaktion auf das Empfangen einer Benutzeranfrage für die Kollaborationsfunktionsfähigkeit über die Benutzerschnittstelle (222/272) erzeugt wird.

15. System, das Folgendes aufweist:
einen oder mehrere Prozessoren (182/184); und
den Speicher (186), wobei der Speicher Anweisungen aufweist, die, wenn sie durch den einen oder mehrere Prozessor/en (182/184) ausgeführt werden, das Verfahren nach irgendeinem der Ansprüche 9 - 14 durchführen.

## Revendications

1. Support lisible par ordinateur non transitoire tangible sur lequel sont mémorisés une pluralité de composants logiciels pour modélisation en trois dimensions, 3D, comprenant :
un composant logiciel d'introduction (196) incluant des premières instructions (240/290) qui, quand elles sont interprétées par une application de navigateur web (194/220/270) s'exécutant sur un ou plusieurs processeurs (182/184) d'un dispositif client (140), amènent l'application de navigateur web (194/220/270) à :
restituer un modèle 3D d'un ou plusieurs objets via une interface d'utilisateur (222/272) du dispositif client (140),
mettre à jour un point de vue correspondant à la restitution du modèle 3D en réponse à la réception via l'interface d'utilisateur (222/272) d'une première commande d'utilisateur pour mettre à jour le point de vue,
recevoir une seconde commande d'utilisateur via l'interface d'utilisateur (222/272), la seconde commande d'utilisateur correspondant à une fonction d'ajout, suppression, changement d'une forme de, changement d'une texture de ou changement d'une couleur de données de modèle 3D d'un objet à l'intérieur du modèle 3D,
déterminer si le composant logiciel d'introduction (196) inclut des secondes instructions (242) correspondant à la fonction d'ajout, suppression, changement d'une forme de, changement d'une texture de ou changement d'une couleur de données de modèle 3D d'un objet à l'intérieur du modèle 3D,
générer une demande pour une composant logiciel étendu (198) en réponse à la détermination (550) que le composant logiciel d'introduction (196) n'inclut pas de secondes instructions (242/292) correspondant à la fonction d'ajout, suppression, changement d'une forme de, changement d'une texture de ou changement d'une couleur de données de modèle 3D d'un objet à l'intérieur du modèle 3D,
amener la demande pour le composant logiciel étendu (198) à être transmise à un serveur (110) via un réseau de communication (150) et
recevoir le composant logiciel étendu (198),
dans lequel le composant logiciel étendu (198) inclut des secondes instructions (242/292) configurées pour ajouter, supprimer, changer une forme de, changer une texture de, changer une couleur de données de modèle 3D de l'objet à l'intérieur du modèle 3D en réponse à la réception, via l'interface d'utilisateur (222/272) de la seconde commande d'utilisateur.

2. Support lisible par ordinateur selon la revendication 1, dans lequel les secondes instructions (242) sont interprétables par l'application de navigateur web (220).

3. Support lisible par ordinateur selon la revendication 1, dans lequel les secondes instructions (292) sont des instructions compilées.

4. Support lisible par ordinateur selon la revendication 1, dans lequel les premières instruction (240/290) qui amènent l'application de navigateur web (220/270) à mettre à jour le point de vue correspondant à la restitution du modèle 3D amènent l'application de navigateur web (192/220/270) à :
interpréter les données de modèle 3D (162), dans lequel les données de modèle 3D (162) représentent le modèle 3D et sont dans un format de non image ; et
mettre à jour le point de vue correspondant à la restitution du modèle 3D, en incluant de ne pas modifier les données de modèle 3D (162).

5. Support lisible par ordinateur selon la revendication 1, dans lequel les secondes instructions (242/292) qui sont configurées pour modifier le modèle 3D sont configurées pour interpréter les données de modèle 3D (162), dans lequel les données de modèle 3D (162) représentent le modèle 3D et sont dans un format de non image.

6. Support lisible par ordinateur selon la revendication 1, dans lequel :
la pluralité de composants logiciels pour la modélisation 3D comprennent en outre un composant logiciel de collaboration ;
les premières instructions (240/290) du composant logiciel d'introduction (196) amènent en outre l'application de navigateur web (194/220/270) à générer une demande pour le composant logiciel de collaboration, dans lequel la demande pour le composant logiciel de collaboration est générée e réponse à la réception via l'interface d'utilisateur (222) d'une demande d'utilisateur pour une fonctionnalité collaborative ; et
le composant logiciel de collaboration inclut des troisièmes instructions configurées pour fournir au moins une fonction pour un développement de modèle 3D collaboratif.

7. Support lisible par ordinateur selon la revendication 6, dans lequel les troisièmes instructions incluent des instructions configurées pour mettre à jour un second point de vue correspondant à une restitution du modèle 3D sur un second dispositif client en réponse à la réception via l'interface d'utilisateur (222) d'une commande d'utilisateur pour mettre à jour le second point de vue, et dans lequel le second dispositif client est couplé en communication avec le dispositif client par une connexion de réseau.

8. Support lisible par ordinateur selon la revendication 1, dans lequel les premières instructions amènent en outre l'application de navigateur web (194/220/270) à :
en réponse à la détermination (550) que le composant logiciel d'introduction (196) n'inclut pas les secondes instructions (242/292) correspondant à la fonction d'ajout, suppression, changement d'une forme de, changement d'une texture de ou changement d'une couleur de données de modèle 3D d'un objet à l'intérieur du modèle 3D, amener (570) à générer une intervention d'utilisateur pour demander la permission d'au moins un du téléchargement du composant logiciel étendu (198) ou l'installation du composant logiciel étendu (198).

9. Procédé implémenté dans un dispositif de serveur (110) pour fournir une fonctionnalité d'un système de modélisation en trois dimensions, 3D, à un utilisateur au niveau d'un dispositif client (140), dans lequel le dispositif de serveur (110) est couplé au dispositif client (140) via un réseau de communication (150), **caractérisé en ce que** le procédé comprend les étapes consistant à :
fournir (320/420) un composant logiciel d'introduction (154/196) incluant des premières instructions (240/290) qui, quand elles sont interprétées par une application de navigateur web (192/220/270) s'exécutant sur un ou plusieurs processeurs (182/184) du dispositif client (140), amènent l'application de navigateur web (192/220/270) à :
restituer (530) un modèle 3D d'un ou plusieurs objets via une interface d'utilisateur (222) du dispositif client (140), incluant d'interpréter des données de modèle 3D (162) quid écrivent le modèle 3D et sont conformes à un format de non image,
générer une demande pour un composant logiciel étendu (156/198) en réponse à la réception (540) via l'interface d'utilisateur (222) du dispositif client (140), d'une demande d'utilisateur correspondant à une fonction d'ajout, suppression, changement d'une forme de, changement d'une texture de ou changement d'une couleur de données de modèle 3D d'un objet à l'intérieur du modèle 3D et déterminer que le composant logiciel d'introduction (1154/96) ne prend pas en charge la fonction d'ajout, suppression, changement d'une forme de, changement d'une texture de ou changement d'une couleur de données de modèle 3D d'un objet à l'intérieur du modèle 3D, et
amener la demande pour le composant logiciel étendu (156/198) à être transmise au dispositif de serveur (110) via le réseau de communication (150) ; le procédé comprenant en outre de :
recevoir (340/440) la demande pour le composant logiciel étendu (156/198) ; et
fournir (360/460) le composant logiciel étendu (156/198) pour le dispositif client (140) en réponse à la réception de la demande pour le composant logiciel étendu (156/198), dans lequel le composant logiciel étendu (156/198) inclut des secondes instructions (242/292) configurées pour ajouter, supprimer, changer un forme de, changer une texture de , changer une couleur de données de modèle 3D de l'objet à l'intérieur du modèle 3D en réponse à la réception via l'interface d'utilisateur (222) du dispositif client (140) d'une commande d'utilisateur pour l'ajout, suppression, changement d'une forme de, changement d'une texture de ou changement d'une couleur de données de modèle 3D d'un objet à l'intérieur du modèle 3D,dans lequel sans le composant logiciel étendu (156/198), la commande d'utilisateur n'est pas prise en charge par le composant logiciel d'introduction (154/196).

10. Procédé selon la revendication 9, dans lequel :
les premières instructions (240/290) amènent en outre l'application de navigateur web (192/220/270) à mettre à jour un point de vue correspondant à la restitution du modèle 3D, dans lequel le point de vue est mis à jour en réponse à la réception d'une commande d'utilisateur pour mettre à jour le point de vue via l'interface d'utilisateur (222) ; et
les premières instructions (240/290) e sont pas configurées pour modifier le modèle 3D en réponse à la réception de la commande d'utilisateur pour modifier le modèle 3D.

11. Procédé selon la revendication 9, dans lequel fournir le composant logiciel d'introduction (154/196) inclut de fournir le composant logiciel d'introduction (154/196) via une première page web (174), et dans lequel fournir le composant logiciel étendu (156/198) inclut de fournir le composant logiciel étendu (156/198) via une seconde page web distincte de la première page web (174).

12. Procédé selon la revendication 9, dans lequel fournir le composant logiciel d'introduction (154/196) inclut de :
fournir une référence (176) à une localisation du composant logiciel d'introduction (154/196) via une première page web (174), dans lequel le composant logiciel d'introduction (154/196) est mémorisé sur un serveur (110) différent du serveur (130) qui mémorise la première page web (174) ; et
fournir le modèle de données 3D (162) via le première page web (174).

13. Procédé selon la revendication 9, dans lequel les secondes instructions (292) sont des instructions compilées, et dans lequel les secondes instructions (292) sont en outre configurées pour :
restituer le modèle 3D via l'interface d'utilisateur (272) du dispositif client (140) ; et
mettre à jour le point de vue correspondant à la restitution du modèle 3D en réponse à la réception via l'interface d'utilisateur (272) de la commande d'utilisateur pour mettre à jour le point de vue.

14. Procédé selon la revendication 9, comprenant en outre de :
fournir un composant logiciel de collaboration incluant des troisièmes instructions qui sont configurées pour fournir au moins une fonction pour le développement de modèle 3D collaboratif, dans lequel les premières instructions (240/290) du composant logiciel d'introduction (154/196) amènent en outre l'application de navigateur web (154/196) à générer une demande pour le composant logiciel de collaboration, et dans lequel la demande pour le composant logiciel de collaboration est généré en réponse à la réception d'une demande d'utilisateur pour une fonctionnalité collaborative via l'interface d'utilisateur (222/272).

15. Système incluant :
un ou des processeurs (182/184) ; et
une mémoire (186), dans lequel la mémoire inclut des instructions qui lorsqu'elles sont exécutées par le ou les processeurs (182/184), mettent en oeuvre le procédé selon une quelconque des revendications 9-14.
